Europäisches Patentamt

European Patent Office

Office européen des brevets

(11) Veröffentlichungsnummer: **0 472 951 A1**

# EUROPÄISCHE PATENTANMELDUNG

(21) Anmeldenummer: **91113041.7**

(22) Anmeldetag: **02.08.91**

(51) Int. Cl.5: **B60L 11/18**

(30) Priorität: **28.08.90 CH 2798/90**

(43) Veröffentlichungstag der Anmeldung:
**04.03.92 Patentblatt 92/10**

(84) Benannte Vertragsstaaten:
**AT BE CH DE DK ES FR GB GR IT LI LU NL SE**

(71) Anmelder: **Jäger, Josef**
**Toggenburger Strasse 104**
**CH-9500 Wil(CH)**

(72) Erfinder: **Jäger, Josef**
**Toggenburger Strasse 104**
**CH-9500 Wil(CH)**

(74) Vertreter: **Révy von Belvárd, Peter**
**Im Lindengarten 18**
**CH-9242 Oberuzwil(CH)**

(54) **Antriebsanordnung für ein selbstfahrendes Fahrzeug.**

(57) Ein batteriebetriebenes Strassenfahrzeug weist zweckmässig wenigstens einen Spannungswandler (2 bzw. 13) im Anschluss an eine Batterie (1) auf. Ferner ist es vorteilhaft, wenn das Bordnetz von einer gesonderten Batterie (10) gespeist wird, die zweckmässig durch eine stabilisierende Schaltung aufladbar ist, insbesondere durch ihre Verbindung über den spannungsgeregelten Spannungswandler (2). Schliesslich ist vorteilhaft ein Doppelmotor (5, 6, 18) mit einem für zwei Rotoren (5, 6) gemeinsamen Stator (18) vorgesehen, wobei der Stator (18) zweckmässig an einen Kühlkreislauf (24) angeschlossen ist. Der Generatorbetrieb dieses Motors (5, 6, 18) kann durch eine Steuereinrichtung (43) unterbrochen werden, wenn die Strassenverhältnisse eine Bremsung nicht erlauben.

Fig.1

EP 0 472 951 A1

Die Erfindung betrifft eine Antriebsanordnung nach dem Oberbegriff des Anspruches 1.

Derartige Fahrzeuge werden zur Zeit in grosser Zahl gebaut und benutzt. Im allgemeinen ist ein Verbrennungsmotor vorgesehen, über den auch die Batterie aufladbar ist.

Der Erfindung liegt nun die Aufgabe zugrunde, eine Alternative für einen solchen Antrieb aufzuzeigen. Dies geschieht durch die kennzeichnenden Merkmale des Anspruches 1.

Zur Zeit sind Batterien mit verschiedenen Batteriecharakteristiken hinsichtlich Batterie-Kapazität und/oder Batteriespannung im Handel. Um nun die erfindungsgemässe Antriebsanordnung möglichst universell anwendbar zu machen, sind die Merkmale des Anspruches 2 vorgesehen. Dabei kann der Umschalter manuell bedienbar sein, gegebenenfalls kann aber auch ein Sensor die jeweilige Charakteristik, z.B. die Spannung, abfühlen und durch sein Ausgangssignal die Umschalteinrichtung automatisch betätigen. Dabei ist es vorteilhaft, wenn die insbesondere einen Mikroprozessor aufweisende Versorgungssteuereinrichtung mit dem Spannungsregler und gegebenenfalls dem Ladegleichrichter zu einer Baueinheit verbunden ist, da dann leicht auch eine Ueberwachung der Batterie hinsichtlich Temperatur, Spannung, Energieverbrauch und/oder Energievorrat realisierbar ist. Ausserdem dient diese Massnahme der Verwirklichung einer kompakten und leicht zu kühlenden Bauweise.

Eine bessere Anpassung an die Fahrverhältnisse in einem Fahrzeug nach Anspruch 1 ergibt sich für die Batterie durch die Massnahme nach Anspruch 3. Diese Massnahme ermöglicht ungewöhnlich hohe Impulsfrequenzen und damit besonders gute Fahrleistungen, insbesondere wenn die Merkmale des Anspruches 4 erfüllt sind.

Durch den Fahrbetrieb ist es praktisch unvermeidlich, dass sich innerhalb des an die Fahrzeugbatterie angeschlossenen Netzes Schwankungen ergeben. Um nun den Kühlkreislauf unabhängig von solchen Schwankungen zu machen, werden vorteilhaft die Merkmale des Anspruches 5 verwirklicht, durch dessen Fakultativmerkmal die Kühlung noch stabiler gehalten werden kann.

Durch die Ausbildung nach Anspruch 1 ist es praktisch unvermeidlich, dass auch die dazu verwendete Elektronik einen guten Anteil an Wärme abgibt. Nun sind aber viele elektronische Bauteile hinsichtlich der Wärme empfindlich und können sogar ihre Charakteristiken temperaturabhängig verändern. Um nun die Betriebssicherheit zu erhöhen, sind die Merkmale des Anspruches 6 vorgesehen, und es versteht sich, dass der, beispielsweise als Gehäuse ausgebildete, Träger zweckmässig möglichst viele der so gefährdeten Bauelemente aufnimmt, wodurch sich auch eine kompaktere Bauweise ergibt, die leicht zu warten ist.

Gerade der Motorblock weist in einem herkömmlichen Fahrzeug ein nicht unbeträchtliches Gewicht auf. Um nun für die Zwecke der Erfindung einen leistungsstarken, jedoch kompakteren Antrieb für ein Räderpaar einer Achse zu schaffen, sind vorzugsweise die Merkmale des Anspruchs 7 vorgesehen. In der Praxis hat sich überraschend gezeigt, dass damit, bei gleicher Leistung eine wenigstens fünffach kleinere Masse erzielbar ist, wobei sich, insbesondere in Kombination mit den Merkmalen des Anspruches 3 bzw. 4 ein mindestens verdoppeltes Gesamtdrehmoment ergibt, das sogar das Dreifache erreichen kann. Optimale Leistungen ergeben sich bei einer Auslegung nach den Merkmalen des Anspruches 9.

Es ist klar, dass bei einer so grossen Leistung auf so engem Raum gegebenenfalls die Wärmeabfuhr zum Problem werden kann. Dieses Problem wird durch die Merkmale des Anspruches 8 gelost. Es ist bekannt, dass Elektro-Motoren für gewisse Anwendungen wahlweise als Generatoren durch entsprechende Umschaltung betreibbar sind. Bei einem Fahrzeug, wie es durch die Erfindung verwirklicht werden soll, d.h. einem Strassenfahrzeug (in weitestem Sinne, da gegebenenfalls auch Werkfahrzeuge bei strassenähnlichen Fahrbahnverhältnissen fahren müssen), muss man nun damit rechnen, dass sich die Fahrbahn in einem schlupfbegünstigenden Zustand befindet, insbesondere ölbeschmutzt oder eisbedeckt ist. In einem solchen Falle führt ein Bremsmanöver stets dazu, dass die Kontrolle über das Fahrzeug verloren geht. Nun sind für normale Bremsen Antiblockiersysteme in zahlreichen Varianten vorgeschlagen worden. Hier geht es aber um die Bremswirkung eines Generators. Um nun auch dieses Problem zu lösen, werden erfindungsgemäss die Merkmale des Anspruches 10 vorgeschlagen.

Weitere Einzelheiten der Erfindung ergeben sich anhand der nachfolgenden Beschreibung eines in der Zeichnung schematisch dargestellten Ausführungsbeispieles. Es zeigen:

Fig. 1
ein Blockschema einer erfindungsgemässen Antriebsanordnung;

Fig. 2
einen erfindungsgemässen Motor an einem Radpaar eines Strassenfahrzeuges (in der oben erwähnten allgemeinsten Bedeutung); und

Fig. 3
die Ansicht eines dazugehörigen Armaturenbrettes;

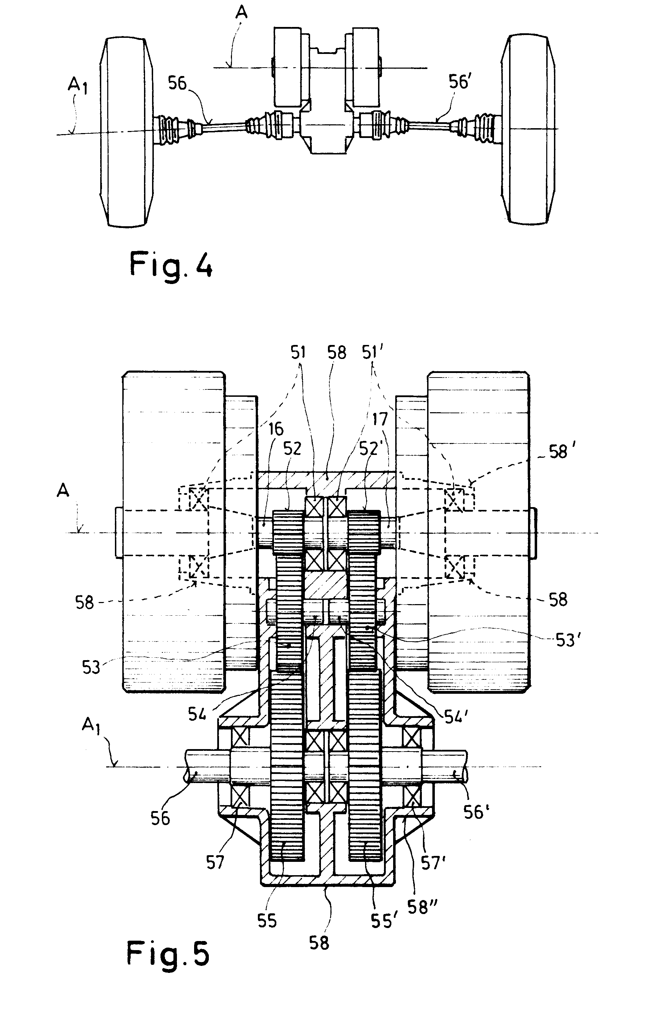

Fig. 4 und Fig. 5
einen weiteren erfindungsgemässen Motor an einem Radpaar eines Strassenfahrzeuges, wobei Fig. 5 den Motor samt Getriebe in grösserem Massstabe veranschaulicht.

An eine Fahrzeugbatterie 1 ist ein Elektronik-Block 26 angeschlossen, der die Versorgungs- und Steuerkreise enthält. Gemäss einer vorteilhaften Anordnung ist die Batterie zunächst an einen Gleichspannungswandler 2 angeschlossen, durch den die Batteriespannung auf eine höhere Spannung angehoben wird, die sich nach der benötigten Leistung richtet und gegebenenfalls wenigstens mehrere hundert, z.B. etwa 1000, Volt betragen kann.

Durch diese Anhebung der Spannung ist es möglich, einen nachfolgenden Strom- bzw. Wechselrichter 3 bzw. 4, mit hoher und sehr effizienter Maximalimpulszahl zu betreiben, die bis zu 10.000 Hz betragen kann, in den meisten Fällen jedoch 8000 Hz nicht übersteigen wird.

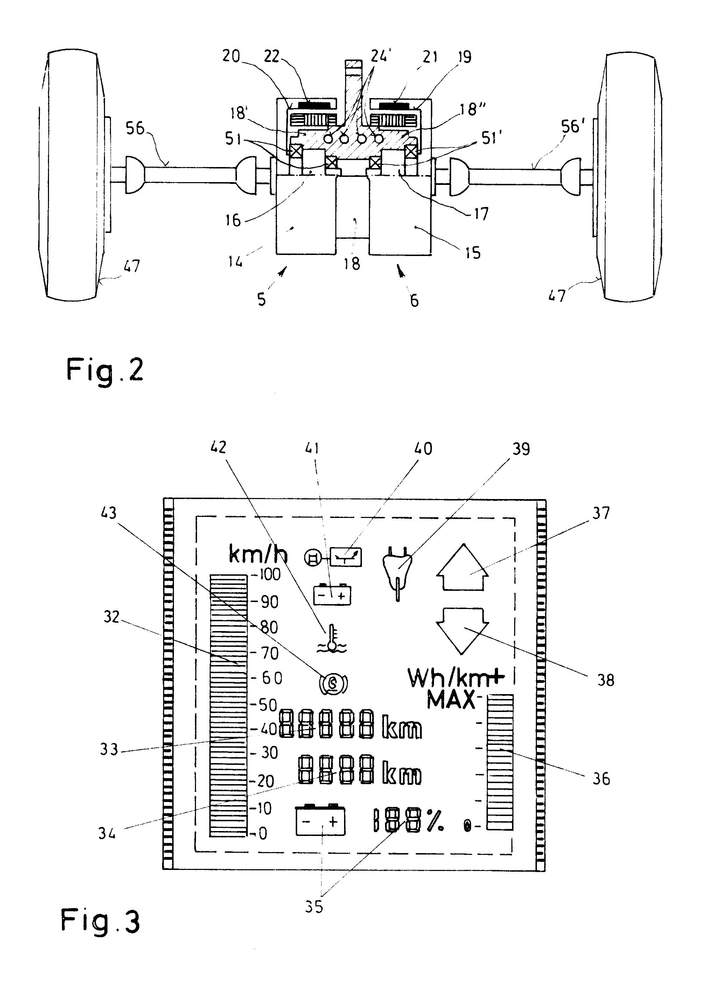

Die Stromrichter 3, 4 dienen zur Ansteuerung zweier Motorteile 5, 6 für je eines der in Fig. 2 dargestellten Räder 47, denen Sensoren 7, 8 zugeordnet sind, um die Drehung derselben zu überwachen, allenfalls sogar einen etwaigen Schlupf auf eisiger Strasse festzustellen. Die Funktion solcher Sensoren ist in der Literatur ausreichend beschrieben und braucht daher nicht näher erläutert zu werden; als Beispiel möge die EP-A-338 414 dienen oder die CH-PS 650 734.

Die Steuerung der Geschwindigkeit des Antriebes erfolgt über eine Steuereinrichtung 9, die ihrerseits durch ein "Gaspedal" 48 im Inneren des Fahrzeuges sowie durch die Lenkung an einem Lenkrad 49 in an sich bekannter Weise beeinflusst wird, um etwa in Kurven unterschiedliche Geschwindigkeiten der beiden Räder 47 (Fig. 2) zu erzielen. Es versteht sich, dass etwa im Falle von Werksfahrzeugen, z.B. Transportieren von Lasten auf einem Werksgelände, auch andere Einrichtungen zur Beeinflussung der Steuerung 9 vorgesehen sein können, wie im Boden versenkte Induktionsschleifen und andere an sich bekannte Einrichtungen zur Beeinflussung der Richtung bzw. Geschwindigkeit eines Fahrzeuges. Bekannt ist beispielsweise der Einbau von Antikollisionssystemen, bei denen die eingestellte Geschwindigkeit vom Abstand vom jeweils vorderen Fahrzeug abhängig ist. Ferner können die Sensoren 7, 8, wie dargestellt, zur Beeinflussung der Geschwindigkeit eingesetzt werden, sei es als blosse Rückmelder zum Einhalten einer vorgewählten Geschwindigkeit, wie es bereits vorgeschlagen worden ist, in welchem Falle an die Steuerung 9 auch ein numerischer Geschwindigkeitsvorwähler angeschlossen sein kann, wenn nicht das Pedal 48 zu diesem Zwecke herangezogen wird; oder die Sensoren 7, 8 dienen als Schlupfmesser, die die Geschwindigkeit des Antriebes bei Schlupfgefahr entsprechend verändern.

Es versteht sich, dass zwar hier nur ein Radpaar 47 dargestellt ist, dass aber auf analoge Weise auch mehrere Radpaare gesteuert werden können, wobei sich dann eine entsprechend höhere Anzahl der dargestellten Kreise ergeben wird, obwohl es möglich wäre, die Räder einer Fahrzeugseite von jeweils einem steuerbaren Stromrichter zu versorgen.

Wie noch erläutert wird, ist es günstig, für einen elektrischen Verbraucher ein eigenes stabilisiertes Bordnetz vorzusehen, das von Strom- und Spannungsschwankungen durch den Fahrbetrieb unabhängig ist. Zu diesem Zwecke ist hier eine gesonderte Bordbatterie 10 vorgesehen, die zweckmässig nicht von den im Bremsbetrieb als Generator arbeitender Motorteilen 5, 6 bzw. ihrem Stator 18 aufgeladen wird, um eben Schwankungen in ihrem Netz zu vermeiden, sondern indirekt über die Fahrbatterie 1. Zu diesem Zwecke ist es aber wiederum günstig, einen Spannungswandler 13 vorzuschalten, der entweder unmittelbar an die Batterie 1 angeschlossen sein kann (falls die beiden Batterien unterschiedliche Spannungen besitzen), zweckmässig jedoch über den Spannungswandler 2, wobei sich ein weiterer Vergleichmässigungseffekt ergibt. Denn wenigstens der Spannungswandler 2 sollte im Sinne einer konstanten Ausgangsspannung geregelt sein und ist zu diesem Zwecke an einen Spannungsregler 29 angeschlossen, der zusammen mit einem Ladegleichrichter 28 und einer Steuereinrichtung 30, vorzugsweise mit einem Mikroprozessor, vorteilhaft eine Baueinheit bildet, um über eine schematisch angedeutete Ueberwachungsleitung 27 die Sicherheitsüberwachung der Batterie 1 hinsichtlich wenigstens eines der Faktoren: Temperatur, Spannung, Energieverbrauch bzw. Energievorrat vornimmt. Ein Umschalter 44 macht es möglich, Batterien mit unterschiedlichen Charakteristiken hinsichtlich Kapazität oder Spannung zu verwenden, wobei der Schalter 44 entweder von Hand aus eingestellt wird und/oder einen (nicht dargestellten Sensor, beispielsweise zum Ablesen der Batteriespannung, und zur Weitergabe dieser Information an den Mikroprozessor 30 aufweist. Der Mikroprozessor 30 steuert dann den Spannungsregler 29 derart, dass trotz unterschiedlicher Batteriecharakteristiken am Ausgange des Stromrichters 3 bzw. 4 stets die gleiche Ausgangsspannung bzw. -frequenz abgegeben wird (natürlich bei gleicher Einstellung der Einstellelemente).

Ein wichtiger, an das Bordnetz der Batterie 10 angeschlossener Verbraucher ist ein Kühlpumpenmotor 11, der eine Kühlpumpe 23 für einen an einen Vorratstank bzw. ein Expansionsgefäss 25 angeschlossenen Kühlkreislauf 24 betreibt. Ein, zweckmässig innerhalb des Blockes 26 sitzender, Temperaturregelkreis 12 misst die Temperatur der Kühlflüssigkeit im Kreislauf 24 (wie strichliert angedeutet) und regelt dementsprechend die Umwälzgeschwindigkeit des Motors 11. Auf diese Weise ist die Kühlwirkung unabhängig von durch den Fahrbetrieb bedingten Energieschwankungen. Andere an das Bordnetz anschliessbare Teile können die Steuerung 9, der schon erwähnte Temperaturregler 12 sowie die Teile mit Ueberwachungsfunktion sein, wie etwa ein Armaturenbrett 31 (vgl. Fig. 3), an das die lediglich schematisch angedeuteten Ausgänge 50a bis 50c des Elektronikblockes 26 gelangen, der hier als wärmeleitendes Gehäuse gleichzeitig auch als Wärmetauscher für den Kühlkreislauf 24 dient. Selbstverständlich können mehr oder weniger als drei Ausgänge 50a - 50c vorgesehen sein, vorzugsweise so viele, als für die später anhand der Fig. 3 beschriebenen Funktionen erforderlich ist.

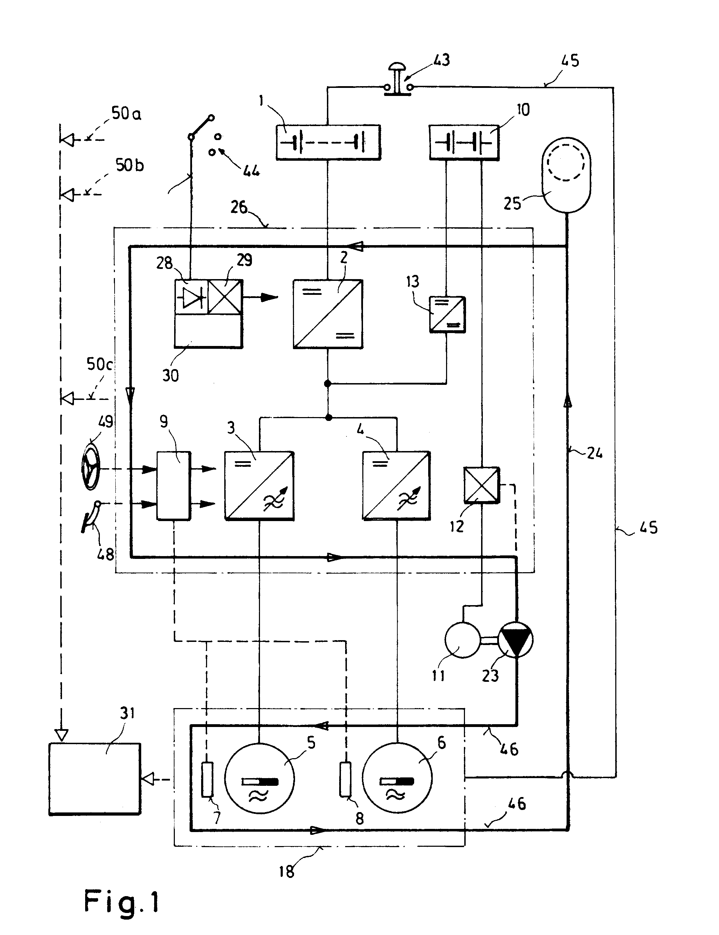

Vorzugsweise wird im Rahmen der Erfindung ein Motor verwendet, wie er nun anhand der Fig. 1 und 2 beschrieben werden soll. Es sei aber darauf hingewiesen, dass ein solcher Motor mit Vorteil überall dort einsetzbar ist, wo zwei nebeneinanderliegende und insbesondere miteinander fluchtende (obwohl dies nicht zwangsläufig erforderlich ist) Antriebe vorgesehen sein müssen, doch ist auch verständlich, dass er sich besonders für Fahrzeuge eignet, da dort diese Bedingung vorgegeben ist und überdies ein Bedarf an einer hohen Leistung besteht.

Nach Fig. 1 befinden sich zwei Rotoren 5, 6 an einem Stator 18, der von Kühlmittel, insbesondere aus dem allgemeinen Kühlkreislauf 24, durchflossen ist. Fig. 2 zeigt nun diese Anordnung im Detail, wobei der Rotor 5 einen hohlzylindrischen Drehkörper 14, vorzugsweise mit Dauermagneten 22 und einen Wellenstummel 16, analog dazu der Rotor 6 einen Drehkörper 15 mit Dauermagneten 21 und einen Wellenstummel 17 umfasst. Wie ersichtlich, ist für beide Rotoren 5, 6 nur ein einziger, gemeinsamer Stator 18 vorgesehen, wodurch eine kompakte, leichte und massesparende Anordnung hoher Leistungsfähigkeit und -dichte geschaffen wird.

Der Stator 18 besitzt zwei annähernd hohlzylindrische Fortsätze 18', 18'', die jeweils die Erregerteile in Form von Spulen 19 bzw. 20 tragen. Natürlich könnte die Anordnung auch umgekehrt sein, indem etwa Dauermagnete am Stator und Spulen an den Rotoren angeordnet sind bzw. können beide Teile mit Erregerspulen versehen sein, doch bedingt dies einerseits die Anordnung von Schleifringen (mit all ihren Nachteilen), anderseits ist bekannt, dass Permanentmagnetmotore besonders günstige und sich speziell für Fahrzeuge eignende Eigenschaften haben, weshalb die gezeigte Anordnung bevorzugt ist.

Es ist günstig, wenn die Wellenstummel 16, 17, wie ersichtlich, doppelte Lager 51 besitzen, wobei die jeweiligen inneren Lager gegebenenfalls noch mehr im Mittelbereich angeordnet sein können, um die Stabilität zu verbessern. Die dargestellte abgestufte Ausbildung des Inneren des Stators 18 erleichtert dabei den Einbau der Lager 51. Es ist klar, dass eine solche Anordnung kompakter ist, als etwa die Anordnung von Lagern an gesonderten, sich links und rechts des Stators 18 vorgesehenen Lagerteilen, obwohl dies im Rahmen der Erfindung, gegebenenfalls auch zusätzlich zur gezeigten Anordnung, möglich wäre.

Aus Fig. 2 ist ferner eine mögliche Anordnung der Kühlkanäle 24' ersichtlich, wobei hier zwei, z.B. parallel betriebene, Kühlkanäle 24' für den Zulauf (vgl. Fig. 1) und zwei für den Ablauf der Kühlflüssigkeit vorgesehen sind. Es könnte die Anordnung jedoch auch so getroffen sein, dass die jeweiligen Zulauf- bzw. Ablaufkanäle auch untereinander in Serie geschaltet sind. In diesem Falle ist es günstig, nach dem Gegenstromprinzip zu arbeiten, indem die Kühlflüssigkeit jeweils zunächst Teile mit geringerer Temperatur und anschliessend mit höherer Temperatur durchlaufen. Hier kommt es sehr stark auf die jeweilige Konstruktion an, wo diese Teile gelegen sind. Normalerweise wird der zentrale Teil des Stators 18 geringere Wärmebelastungen aufweisen, als die Aussenteile 18', 18'', weshalb die Kühlflüssigkeit erst den zentralen Kühlkanal und dann den äusseren Kühlkanal durchlaufen wird. Ist aber der mittlere Teil des Stators sehr schmal ausgebildet und allenfalls der Bildung von Wirbelströmen ausgesetzt, während an relativ dünnen Aussenteilen 18', 18'' eine gute Wärmeabfuhr, allein schon durch den Fahrtwind besteht, so kann die Anordnung umgekehrt werden. Es ist sogar denkbar, Ventile einzubauen, die in Abhängigkeit von den Fahrbedingungen einen Serien- oder einen Parallelbetrieb der Kühlkanäle 24' ermöglichen, um etwa bei Steigungen, an denen die Kühlung durch den Fahrtwind gering, die benötigte Leistung aber gross ist, einen Serienbetrieb, andernfalls einen Parallelbetrieb zu ermöglichen (oder umgekehrt), doch wird dieser Aufwand im allgemeinen nicht erforderlich sein.

Die Steuerung des Doppelmotors 5, 6, 18 wird zweckmässig im Sinne eines sog. Vierquadrantbetriebes erfolgen, d.h. er ermöglicht Fahren (Motorbetrieb) und Bremsen (Generatorbetrieb) sowohl im Vorwärts- als auch im Rückwärtslauf. Auch für diese Zwecke ist die Verwendung eines Permanentmagnetmotors in der geschilderten Weise besonders vorteilhaft. Es hat sich gezeigt, dass die in Fig. 2 dargestellte Ausführung des Motors etwa ein Drittel des Gewichtes bei dreifachem Gesamtdrehmoment gegenüber einem herkömmlichen Wechselstrommotor mit gleicher Drehzahl aufweist. Dabei kann der Motor sogar so ausgelegt werden, dass das Verhältnis seines Gesamtdrehmomentes zur Masse wenigstens 12 : 1, insbesondere mindestens 15 : 1 beträgt, beispielsweise 600 Nm zu 30kg. Die Masse kann dabei etwa ein Fünftel im Vergleich zu einem herkömmlichen Motor betragen, was für die Zwecke eines selbstfahrenden Fahrzeuges natürlich von besonderem Nutzen ist. Das gute Drehmoment/Masse-Verhältnis geht in dem beschriebenen Ausführungsbeispiel allerdings auch zum Teil auf die Anordnung des mindestens einen (gegebenenfalls mehreren kaskadenartig geschalteten) Spannungswandler 2 für die Versorgung des Motors zurück. Die benötigten Impulse werden dabei durch die Elektronik kommutiert.

Im Zusammenhang mit Fig. 1 und der Darstellung des Armaturenbrettes 31 in Fig. 4 soll nun auf die besondere Funktion eines Schalters 43 Bezug genommen werden, der in Fig. 1 an einer Generatorleitung 45 liegt, die ihren Ausgang vom mit den Spulenkränzen 19, 20 (Fig. 2) versehenen Stator 18 nimmt und zur Aufladung der Batterie 1 bei Bremsfahrt dient. Es versteht sich, dass die Leitung 45 hierfür alle notwendigen Einrichtungen, wie Stromventile usw. beinhaltet, die üblicherweise für solche Zwecke vorgesehen werden. Hier soll nur die Tatsache interessieren, dass mit Hilfe des Schalters 43, der beispielsweise in der Fig. 3 gezeigten Art am Armaturenbrett 31 liegen kann, der Generatorbetrieb abschaltbar ist. Dies wird insbesondere dann zweckmässig sein, wenn die Gefahr besteht, dass durch eine Bremsung auf sehr glattem Boden die Herrschaft über das Fahrzeug verloren geht. Allerdings versteht es sich, dass der Schalter 43 gegebenenfalls auch von den Sensoren 7, 8 gesteuert sein kann, wenn diese als Schlupfsensoren ausgebildet sind. Ausserdem ist es, gerade in dem zuletzt genannten Falle gegebenenfalls vorteilhaft, anstelle eines blossen Schalters 43 ein Steuerglied vorzusehen, durch das die Bremsung lediglich vermindert, statt abrupt abgeschaltet wird.

Weitere Anzeigefelder innerhalb des in Fig. 3 gezeigten Armaturenbrettes 31 sind: Ein, zweckmässig als Skala, (gegebenenfalls alternativ oder zusätzlich als Digitalanzeige) ausgebildetes Geschwindigkeitsanzeigefeld 32, ein Kilometerzähler 33, ein Tageskilometerzähler 34, ein Energievorratsanzeiger 35. Diese Digitalanzeige 35 kann gegebenenfalls auch zum Darstellen anderer Informationen ausgenützt werden, wobei beispielsweise für die Anzeige des Energievorrates gleichzeitig das daneben gezeigte Batteriesymbol aufleuchtet, für die Anzeige anderer Informationen ein anderes Symbol. Die Umschaltung von einem Symbol zum anderen kann von Hand aus erfolgen und zeitlich gesteuert sein, wobei gewisse Symbole von einem Taktgenerator nacheinander für eine bestimmte Zeit angesteuert werden; beispielsweise kann dann der Taktgenerator durch manuell einstellbare Anzeigen unterbrochen werden.

Es ist günstig, wenn auch ein Informationsfeld 36 zur Anzeige des augenblicklichen Energieverbrauches vorgesehen ist, und dies zweckmässig in Form einer Skala, wie dargestellt. Allenfalls kann auch je ein Symbol 37 bzw. 38 für Vorwärts- bzw. Rückwärtsfahrt vorhanden sein, obwohl dies auch entfallen kann. Da die Batterie 1 bzw. 10 gegebenenfalls vom allgemeinen Stromnetz, etwa einem Stecker, aufgeladen werden muss, ist es vorteilhaft, ein Steckersymbol 39 aufleuchten zu lassen, wenn ein Nachladen erforderlich wird. Dieses Symbol leuchtet auf, sobald der Batterievorrat einen vorbestimmten Mindestenergievorrat erreicht hat, weshalb gegebenenfalls das Feld 39 das Feld 35 ersetzen kann. Dabei ist die Messung des Energievorrates einer, eine Konstantspannungsquelle darstellenden, Batterie bekanntlich schwierig, und es ist daher möglich, den Mikroprozessor 30 zu seiner Bestimmung in der Weise heranzuziehen, dass - ausgehend von einem angenommenen Gesamtenergievorrat, den eine neue Batterie besitzen sollte - in Funktion der Zeit und der entnommenen Energie der jeweilige verbleibende Energievorrat errechnet wird.

Falls an der Elektronik innerhalb des Elektronik-Gehäuses 26 Mängel auftreten, ist es vorteilhaft, wenn die Steuereinrichtung 30 ein, z.B. periodisch abrufbares, Diagnoseprogramm in einem Programmspeicher enthält, um die Tätigkeit der einzelnen Bauteile, insbesondere der Stromrichter 3, 4 zu überwachen. Bei einem Fehler kann dann eine Anzeige 40 den Fahrer informieren, wobei die gezeigte Symbolik auch durch ein digitales Anzeigefeld ersetzt sein kann, um nähere Angaben über die Art des Fehlers zu geben, falls mehrere verschiedene Elektronikkreise überwacht werden. Natürlich ist auch die Anordnung mehrerer spezifisch auf die Fehlerquelle hindeutender Anzeigefelder möglich.

Auch ein Batteriestörungs-Anzeigefeld 41 kann vorgesehen werden, sowie ein Temperatur-Anzeigefeld 42, das gegebenenfalls nur beim Ueberschreiten eines zulässigen Schwellwertes anspricht.

Eine weitere erfindungsgemässe Ausführungsform sieht gemäss Fig. 4 und Fig. 5 vor, dass die Achse A, um welche die Rotoren drehen, nicht mit einer Radachse A1 zusammenfällt, sondern zu dieser parallel verschoben liegt. Dank dieser Trennung ist es möglich, die Antriebskraft der Rotoren mittels einer aus Ritzeln bestehenden, vorzugsweise festen Untersetzung auf die Radachse zu übertragen. Die Untersetzung ermöglicht einen für Elektromotoren vorteilhaften hochtourigen Betrieb, auch bei tiefen Fahrgeschwindigkeiten. Das Untersetzungsgetriebe besteht vorzugsweise aus Ritzeln 52, 52', die auf den Wellenstummeln 16, 17 sitzen, aus Übertragungsritzeln 53, 53', welche auf Achsen 54, 54' drehbar gelagert sind, und aus Ritzeln 55, 55', die auf Antriebswellen 56, 56' befestigt sind. In einer speziellen Ausführungsform sind die Ritzel so gewählt, dass eine Untersetzung von 5 zu 1 entsteht. Gegebenenfalls kann auf die Übertragungsritzel 53, 53' verzichtet werden, falls die Motordrehrichtung umgekehrt ist, sodass die Ritzel 52, 52' direkt in die Ritzel 55, 55' greifen.

Die mit den Ritzeln 55, 55' versehenen Enden der Antriebswellen 56, 56' sind je in doppelten Lagern 57, 57' gelagert. Die Lager 51, 51', 57, 57', und die Lager-Achsen 54, 54' sind im Innern eines Statorgehäuses 58 angeordnet und an diesem befestigt. Dieses Statorgehäuse 58 ist ein geschlossener Hohlkörper, aus dem lediglich die Rotor-Wellenstummel und die Antriebswellen 56, 56' in abgedichteter Weise austreten. Durch die Quererstreckung der die Achsen A und 56, 56' aufnehmenden, im allgemeinen etwa zylindrisch ausgebildeten Statorabschnitte 58', 58'' ergibt sich eine grössere Stabilität der Lagerung und eine bessere Momentverteilung. Das ganze Getriebe befindet sich somit in einem gegen aussen dicht abgeschlossenen Innenraum, sodass sich keine Verschmutzungsprobleme einstellen können. Die hohle Ausbildung trägt überdies zur Gewichtsersparnis bei.

Es versteht sich, dass auch bezüglich der Ausführung nach den Fig. 4 und 5 zahlreiche Variationsmöglichkeiten bestehen, beispielsweise, indem das von dem als Gehäuse dienenden Erregerteil 57 umschlossene Getriebe zusätzlich oder alternativ als Differenzialgetriebe ausgebildet wird, was die Motorsteuerung erleichtern mag.

**Patentansprüche**

1. Antriebsanordnung für ein schienenloses, selbstfahrendes Fahrzeug, mit einer über eine Aufladeeinrichtung aufladbaren Fahrzeugbatterie (1) und einem Antriebsmotor (5 bzw. 6) für wenigstens ein Paar von Antriebsrädern, wobei ein Kühlkreislauf (24) für die Abfuhr der beim Antrieb entstehenden Wärme sorgt, dadurch gekennzeichnet, dass der Antriebsmotor von einem Elektromotor (5 bzw. 6) gebildet ist, dem ein mit der Fahrzeugbatterie (1) verbundenes Versorgungssystem vorgeschaltet ist, und dass dem elektrischen Motor (5 bzw. 6) eine elektrische Steuereinrichtung (9) mindestens für eine Geschwindigkeitseinstellung zugeordnet sind.

2. Anordnung nach Anspruch 1, dadurch gekennzeichnet, dass eine elektrische Versorgungssteuereinrichtung (30), insbesondere mit einem Mikroprozessor, zusammen mit einem Spannungsregler (29), gegebenenfalls auch mit einem Ladegleichrichter (28), an einen Umschalter (44) für verschiedene Batteriecharakteristiken zwecks Anpassung an die jeweils verwendete Batterie angeschlossen sind, und dass vorzugsweise Versorgungssteuereinrichtung (30) und Spannungsregler (29) sowie gegebenenfalls der Ladegleichrichter (28) in einer Baueinheit zusammengefasst sind.

3. Anordnung nach Anspruch 1 oder 2, dadurch gekennzeichnet, dass das Versorgungssystem mindestens einen der Fahrzeugbatterie (1) nachgeschalteten, zweckmässig geregelten, Gleichspannungswandler (2 bzw. 13) aufweist,

und dass vorzugsweise eine weitere, zur Versorgung des Bordnetzes dienende Batterie (10) über wenigstens einen Gleichspannungswandler (13 bzw. 2) mit der Fahrzeugbatterie zu ihrer Aufladung verbunden ist.

4. Anordnung nach Anspruch 3, dadurch gekennzeichnet, dass das Versorgungssystem zumindest einen für die Abgabe einer Impulsfrequenz bis 8000 Hz ausgelegten Stromrichter (3 bzw. 4) aufweist.

5. Anordnung nach einem der vorhergehenden Ansprüche, dadurch gekennzeichnet, dass dem Kühlkreislauf (24) eine von einem Motor (11) angetriebene Umwälzpumpe (23) zugeordnet ist, dass dieser Kühlpumpenmotor (11) an eine von der Fahrzeugbatterie (1) gesonderte, gegebenenfalls über sie aufgeladene Batterie (10) angeschlossen ist,

und dass vorzugsweise diesem Motor (11) ein Temperaturregler (12) zur Regelung seiner Drehzahl in Funktion der gemessenen Temperatur der Kühlflüssigkeit zugeordnet ist.

6. Anordnung nach einem der vorhergehenden Ansprüche, dadurch gekennzeichnet, dass der Kühlkreislauf (24) einen Wärmetauscher (26) durchfliesst, der als wenigstens einen Teil der Einrichtungen des Versorgungssystems und/oder der Steuereinrichtung (30) aufnehmendes wärmeleitender Träger ausgebildet ist.

7. Anordnung nach einem der vorhergehenden Ansprüche, dadurch gekennzeichnet, dass der Motor (4 bzw. 5) einen den Rotoren (14, 15) eines Räderpaares gemeinsamen Statorbauteil (18) mit von einem Mittelteil nach beiden Seiten hin abstehenden Erregerteilen (18', 18''), die vorzugsweise Spulenkränze (19, 20), insbesondere zur Erregung von Dauermagnetpolen (21, 22) der Rotoren (14, 15), aufweisen,

und dass bevorzugt wenigstens eines der folgenden Merkmale vorgesehen ist:
   a) die Erregerteile (19, 20) sind als in hohle Aussenläuferrotoren (14, 15) hineinragende Innenteile ausgebildet;

b) die Erregerteile (19, 20) umschliessen die angetriebenen Rotorwellen (16, 17) in ihrem hohlen Inneren, das vorzugsweise abgestuft, mit von aussen nach innen sich verringerndem Durchmesser ausgebildet ist, wobei Wellenlager (51) an zugehörigen Abstufungen des Statorinneren angeordnet sind.

c) die Erregerteile (19, 20) umschliessen die angetriebenen Rotorwellen (16, 17) in ihrem hohlen Inneren und sind als quer zur Fahrrichtung sich erstreckende, längliche Hohlkörper ausgebildet;

d) die Erregerteile (19, 20) sind wenigstens teilweise hohl und nehmen in ihrem Inneren einen Teil eines Kühlkreislaufes und/oder ein Getriebe (52, 53, 55, 52', 53', 55'), insbesondere ein Untersetzungsgetriebe, auf.

8. Anordnung nach Anspruch 7, dadurch gekennzeichnet, dass der gemeinsame Statorbauteil (18) mit einer Zuführleitung für ein Kühlmedium verbunden ist, insbesondere an den allgemeinen Kühlkreislauf (24) angeschlossen ist und/oder

dass die Rotoren (14, 15) zwecks direktem Antrieb der Räder frei von Getriebeverbindungen sind oder über ein Getriebe (52, 53, 55, 52', 53', 55') mit einer zu ihren Achsen (A) wenigstens annähernd parallelen Radachsen (56, 56') in Verbindung stehen.

9. Anordnung nach Anspruch 7 oder 8, dadurch gekennzeichnet, dass der Motor (4 bzw. 5) ein Verhältnis von Gesamtdrehmoment zu Masse von wenigstens 12 : 1, insbesondere mindestens 15 : 1, aufweist, beispielsweise von 600 NM : 30 kg.

10. Anordnung nach einem der vorhergehenden Ansprüche, dadurch gekennzeichnet, dass der Motor (4 bzw. 5) über die Steuereinrichtung (9) wahlweise als Generator zur Bremsung und zum Umwandeln der Bremsenergie in elektrische Energie zwecks Aufladung der Fahrzeugbatterie (1) betreibbar ist, dass eine Steuereinrichtung (43), insbesondere ein Schalter (43), vorgesehen ist, durch die der Generatorbetrieb ausser Funktion setzbar ist,

und dass vorzugsweise die Steuereinrichtung (43) einen manuell betätigbaren Schalter (43) und/oder eine Schlupfdetektorschaltung (vgl. 7, 8) zu ihrer Betätigung aufweist.

Fig.1

Fig.2

Fig.3

Fig. 4

Fig. 5

Europäisches
Patentamt

EUROPÄISCHER
RECHERCHENBERICHT

Nummer der Anmeldung

EP 91 11 3041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 371 824 (D.J. GRITTER) <br> * Zusammenfassung; Figuren 2, 5 * <br> − − − | 1-4 | B 60 L 11/18 |
| A | DE-A-3 410 293 (ELEKTRON-BREMEN FABRIK FUER ELEKTROTECHNIK GMBH) <br> * Zusammenfassung; Figur 1 * <br> − − − | 1-4,10 | |
| A | EP-A-0 116 925 (BBC) <br> * Ansprüche 1-7; Figur 1 * <br> − − − | 1 | |
| A | ELEKTRISCHE BAHNEN. vol. 85, no. 8, 1987, MUNCHEN DE Seiten 252 - 260; J. ANGELIS ET AL: "ELEKTROAUTO MIT HOCHENERGIEBATTERIE" <br> * Seite 256; Figur 7 * <br> − − − | 1-3 | |
| A | DE-A-3 501 029 (V. BADER) <br> * das ganze Dokument * <br> − − − − − | 1,5,6 | |

| RECHERCHIERTE SACHGEBIETE (Int. Cl.5) |
|---|
| B 60 L |

Der vorliegende Recherchenbericht wurde für alle Patentansprüche erstellt

| Recherchenort | Abschlußdatum der Recherche | Prüfer |
|---|---|---|
| Den Haag | 17 September 91 | BEYER F. |